# EUROPEAN PATENT APPLICATION

(11) **EP 3 187 332 A1**
(43) Date of publication of application: **05.07.2017**
(21) Application number: 15202893.2
(22) Date of filing: 29.12.2015
(51) Int. Cl.: B32B 15/04, B32B 15/08, B32B 15/085, B32B 15/088, B32B 15/09, B32B 15/12, B32B 27/08, B32B 27/30, B32B 27/32, B32B 27/34, B32B 27/36, B32B 29/00

(54) **FOIL FOR SEALABLE CONTAINER LIDS**

(71) Applicant: Nyco Flexible Packaging GmbH, 3422 Kirchberg BE (CH)
(72) Inventor: Hirschi, Tobias, 4537 Wiedlisbach (CH)
(74) Representative: AMMANN PATENTANWÄLTE AG BERN

(57) **Abstract**

In order to reduce the thickness of the carrier layer (3) in a foil (1) suited for obtaining sealable lids (2) with maintaining bending stiffness, a stabilizing layer (7) is proposed. The stabilizing layer (7) may be a continuous layer or a pattern. Preferably, the stabilizing layer (7) is applied on top of the print (5) so that the pattern of the stabilizing layer, also of a transparent material, adds an aesthetic effect. The stabilizing layer (7) is preferably applied by a printing process, i.e. is easily integrated in existing manufacturing processes of such foils.

## Description

The present invention relates to a foil for sealable container lids according to the preamble of claim 1. If further relates to a method of manufacturing the foil and a sealable lid consisting of the foil.

Sealable lids are in widespread use for tightly closing containers for foodstuff and other goods. Generally, a lid is placed on an opening of a filled container and heated at least where it is in contact with the periphery of the opening. The sealable layer on the lower surface of the lid is molten and when solidified by cooling, builds a tight junction between the container and the lid. The lids are commonly cut out of large webs of a foil and provided to the packaging machines as stacks of lids. In the packaging machine, the lids are picked individually, i.e. are unstacked, at high speed and placed on the opening of the filled container. Important parameters for an error free unstacking and handling (transport etc.) in the packaging machine are the adhesion between lids in the stack, rigidity or bending stiffness; and the size or diameter of a lid. Generally the larger a lid is the higher the bending stiffness has to be. Bending stiffness, or bending resistance, of a material is measured according to DIN 53121 (1974).

Regarding adhesion, anti-stacking surface coatings are known. For instance, such a coating may provide a rough surface so that capillary effects occurring between smooth surfaces are suppressed. For bending stiffness, the material of the carrier layer of the foil, i.e. the basic web material, most commonly paper, metal like aluminum, or a polymer material, had to be carefully chosen as the carrier layer determines the bending stiffness. Therefore, the carrier material had a minimum prescribed thickness. However, the carrier material also constitutes a major cost factor, and the minimum thickness required limits the number of lids per stack of a given height. Furthermore, the carrier material creates ecological problems which increase with its quantity i.e. its thickness.

Therefore, an object of the present invention is to provide a foil for sealable lids of reduced thickness of the carrier layer with maintaining bending stiffness.

Such a foil is defined in claim 1. The further claims present preferred embodiments, methods of manufacturing the foil and a lid produced from the foil.

Accordingly, it is proposed to increase the overall bending stiffness by providing a stabilizing layer in the foil or on its surface. Surprisingly, the stabilizing layer can be applied by printing in a very efficient manner in conjunction with other printing and laminating steps. Furthermore, the stabilizing layer need not be a continuous layer but may be a pattern so that less printing ink is required. The pattern may be regular or irregular, constituted by contiguous structures like lines or by isolated structures like points, or non-contiguous lines. Of course, mixtures of these elements are conceivable.

In a preferred embodiment, the stabilizing layer is applied as the topmost layer, i.e. over the print, and an esthetically attractive pattern is chosen so that the optical effect of the print below is emphasized and embellished.

The invention will be further explained by way of preferred exemplary embodiments and execution examples with reference to the Figures:
- Fig. 1: a cross-section through a foil;
- Fig. 2: enlarged prototype detail II in Fig. 1;
- Fig. 3-9: examples of patterns for the stabilizing layer; and
- Fig. 10: section through a container closed by a lid.

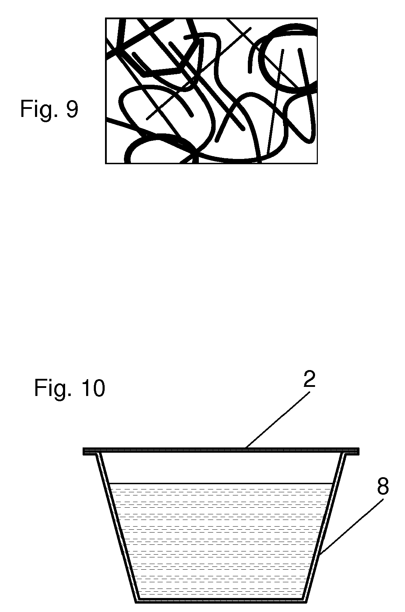

The foil 1 for sealable lids 2 comprises a carrier layer 3, which bears the print 5. On top of print 5, the stabilizing layer 7 is provided. The zigzag line of stabilizing layer 7 does not represent the actual shape but hints that the stabilizing layer 7 comprises a structure of a height superior to that of the print. Below the carrier layer 3, i.e. towards the future container 8 (cf. Fig. 10) to be sealed and the product contained therein, the sealing layer 9 is applied. Additionally to carrier layer 3, print 5, sealing layer 9, other layers known per se in the art for sealable lids, like a protective lacquer for the print, may possibly be present, although such additional layers are not shown in the Figure.

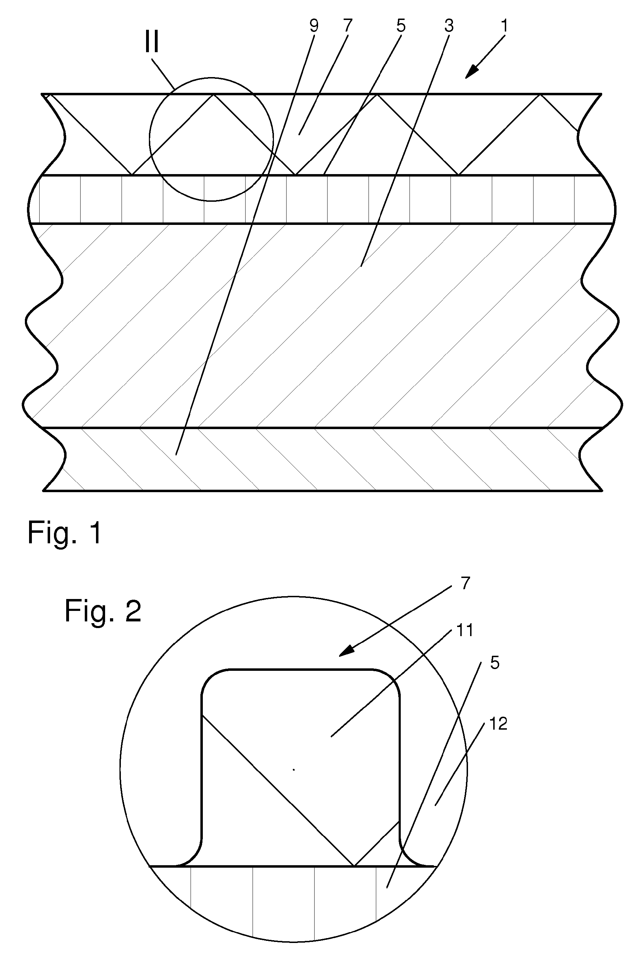

The thickness of the carrier layer 3 is reduced with respect to foils lacking a stabilizing layer as the latter provides an increase of the bending stiffness which in the prior art has to be provided substantially by the carrier layer alone. Fig. 2 is a partial schematical and enlarged section of Fig. 1. It shows a section through one of the ridges or elevations 11 of the structures or the design which is applied as the stabilizing layer 7. Of course, the shape and extension of the ridge 11 may largely vary. In particular, it may be relatively higher or more shallow and may be broader, in particular broader than appearing in Fig. 2 or thinner, and its shape need not be rectangular. The shape will depend, of course, also on the method used for applying the stabilizing layer. Suited printing methods are for example, flexo print or gravure print.

The ink has preferably an elevated viscosity, as the printed pattern has to retain its shape from applying the ink up the cured or dried state. A kind of inks satisfying this criterion is UV-curable inks, which provide a gel-like rheology. Regarding the composition, inks based on a synthetic resin as the binder are preferred. The viscosity of applicable UV inks is found to be in the range 60 s to 140 s (seconds) and preferably about 100 s at 23 °C in a DIN4 measuring cup.

The space 12 not covered by the elements of the stabilising pattern may be left empty (air) if the stabilising layer is the topmost layer as in the present example, or partly or completely filled with another or the same material. Even if the ink for producing the stabilising layer is transparent, the stabilising layer influences sensibly the appearance of the lid due to the significant height of its pattern. Therefore, the stabilizing layer 7 over the print 5 creates a further aesthetically attractive effect as a second, optional function.

The carrier layer may have a thickness of generally 6 to 250 µm (micrometer).

More details of preferred materials of the carrier layer are :

| **Material** | **Thickness** | | |
|---|---|---|---|
| | **upper limit** | **range** | **individual values, also combinable in any pairing to subranges** |
| | **[µm]** | **[µm]** | **[µm]** |
| Al | ≤80 | 6-80 | 6, 12, 20, 30, 40, 50, 60, 70, 80 |
| Paper | ≤175 | 25-175 | 25, 50, 75, 100, 125, 150, 175 |
| Plastic | ≤250 | 9-250 | 9, 12, 15, 20, 30, 50, 70, 100, 150, 200, 250 |

The plastic may be, for example, polyethylene terephtalate, polyester, polyethylene, polyamide, polypropylene, polyvinylchloride; composite materials, like starting from the bottom, i.e. the container-oriented face, aluminum/aluminum, aluminum/plastic, plastic/aluminium, plastic/plastic, aluminum/paper, paper/aluminum, paper/paper. Aluminum and polyester (plastic) are preferred for foodstuff containers.

The tensile strength of the aluminum used is preferably in the range of 50 to 250 N/mm², and polyester in the range 40 to 300 N/mm². The print layer 5 has a thickness of up to 50 µm. By routine, first a print primer or undercoat (not shown) is applied to safeguard sufficient adhesion between substrate and print. On the undercoat, the print is applied e.g. by flexo print, gravure print, offset print or digital print. The stabilizing layer 7 has a thickness of at most 150 µm and of at least 1 µm, more preferably at least 4 µm.

Preferred is a thickness of 10 to 50 µm. Further preferred are about 10, 20, 30, 40, and 50 µm as discrete thickness values each time with usual tolerance, e.g. at most 10 %, or as boundaries of subranges in any combination.

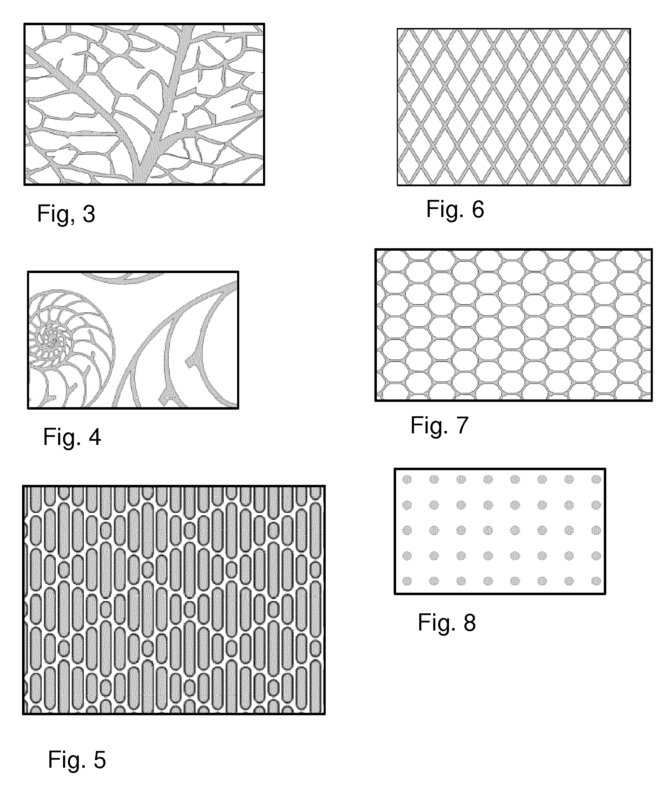

The pattern used may be designed in a broad variety, cf. the illustrations of Figs. 3 to 9. The pattern is chosen such that at least at the location of the lids in the foil web, the stabilizing layer provides an increase of the bending strength of at least 10 % in comparison with the foil without the stabilizing layer.

Preferably, the stabilising pattern comprises objects which interlace (cf. Fig. 5) and / or comprise lines as the effect on bending stiffness is believed to be increased with respect to a pattern of isolated patches like the discs in Fig. 8. Good results are obtained by aesthetically appealing patterns comprising extended line arrangements (cf. Fig. 3), possibly of fractal geometry, or interlaced arrangements of lines like those of Fig. 4. Impressive effects on bending stiffness in combination with optical effects provide the regular line arrangements of Figs. 6 and 7, i.e. arrangements of intersecting lines creating polyhedra like triangle, quadrangle, hexagon etc. of high symmetry (cf. Fig. 7), lower symmetry (cf. diamonds of Fig. 6) or even down to no symmetry. Randomly chosen and arranged lines or areas may be used as shown in Fig. 9 as an example.

It is however, recommended to have at least in the area of the lids, i.e. where the lids are subsequently punched out, a minimal average quantity of stabilizing polymer as the stabilizing layer.

On the other side of the carrier layer, at a point in time from before applying the print until after applying the print the sealing layer 9 is applied. The stabilizing layer 7, although preferably applied on top of the print in order to confer an additional esthetical element, may in general be arranged between any two other layers.

In the Figures, only the main components are shown. There may be other layers known per se, like a layer for increasing adhesion of the print, or a print protection layer, or a further sealable layer between carrier layer and stabilising layer. The latter further sealable layer has, however, substantially no contribution to the bending stiffness and a roughness of about 0.

From a web of the structure described, lids 2 can be cut out or punched out having sufficient strength and in particular bending stiffness to be fault-free handled by known packaging machines. Such lids are used in the foodstuff industry, in particular for packaging dairy products, yoghurts, gourmet food, instant meals. In particular in packaging these kinds of goods, sealable lids of a guaranteed bending stiffness are needed. Therefore, the stabilizing layer is indispensable for reducing the thickness of the carrier layer and in consequence its quantity for economic and environmental reasons.

From the description set forth above, numerous alternations and modifications are conceivable by the one skilled in the art without leaving the scope of protection which is defined by the attached claims.

## Claims

1. Foil (1) for sealable lids comprising
- a carrier layer (3),
- a sealable layer (9) as the lowest layer substantially constituted by a sealable material;
- a print layer (5) at least partially visible from top and substantially constituted by a print;
**characterized in that**
the foil further comprises at least one stabilizing layer (7), the stabilizing layer being constituted by a plastic material in such an amount overall or at least in places where useful pieces are intended to be cut out that the bending stiffness of the foil is increased by at least 10 % so that a carrier layer of smaller thickness can be deployed.

2. Foil (1) according to claim 1, **characterized in that** the stabilizing layer (7) is substantially constituted by printed structures (11), preferably by transparent printed structures, the printed structures having a height of at least 1 µm (mikrometer), preferably a height in the range 4 to 100 µm.

3. Foil (1) according to claim 2, **characterized in that** the majority of the printed structures (11), preferably at least 90 %, even more preferably at least 99 %, of the area covered by the printed structures, have a height of at least 10 µm (micrometer), and more preferably have a height in the range 10 to 60 µm.

4. Foil (1) according to one of claims 1 to 3, **characterized in that** the stabilizing layer is substantially constituted by printed structures and the printed structures (11) of the stabilizing layer (7) are substantially constituted by a lacquer comprising a synthetic binder, preferably a synthetic resin binder.

5. Foil (1) according to one of claims 1 to 4, **characterized in that** the stabilizing layer (7) comprises a plastic which is transparent and is either colourless, coloured, or partly coloured and partly colourless, so that the stabilizing layer printed as a topmost layer adds an optically conceivable effect and the print layer (5) remains visible.

6. Foil (1) according to one of claims 1 to 5, **characterized in that** the structures of the stabilizing layer (7) are one or more of: lines; intersecting lines; interlacing lines; pattern built of polygons of the same or different numbers of edges; patches of regular or irregular shape; circular patches; polygonal patches;

7. Foil (1) according to one of claims 1 to 6, **characterized in that** the carrier layer substantially consists of one of the following materials: aluminum; paper; plastic; aluminum of a thickness in the range 6 to 80 µm and/or a tensile strength in the range 50 to 250 N/mm²; paper of a thickness in the range 25 to 175 µm; plastic of thickness in the range 9 to 250 µm; polyester plastic; polyester plastic of a thickness in the range 9 to 250 µm and/or a tensile strength in the range 40 to 300 N/mm², or a basic foil consisting of at least two of the aforementioned materials.

8. Foil (1) according to claim 7, **characterized in that** the carrier layer (3) consists of one of the following foils composed at least of, each time from bottom to top:
aluminum/aluminum; aluminum/plastic; plastic/aluminum; plastic, plastic;
aluminum/paper; paper/aluminum; paper/paper.

9. Foil (1) according to one of claims 5 to 8, **characterized in that** the plastic of the carrier layer (3) is at least one of: polyethylene terephtalate, polyethylene, polyamide, polypropylene, polyvinyl chloride.

10. Foil (1) according to one of claims 1 to 8, **characterized in that** a sealable layer of superficial roughness of about 0 and without sensible stabilization effect is present between carrier layer and stabilizing layer.

11. A method for manufacturing the foil according to one of claims 1 to 10, **characterized in that** the stabilization layer is printed on a layer of the foil, preferably on the topmost layer.

12. Method of manufacturing the foil (1) according to claim 11, **characterized in that** the ink for printing the stabilizing layer (7) is a UV curable ink having a viscosity in the range 60 s - 140 s (seconds), preferably about 100 s, at 23 °C in a DIN4 measuring cup, so that structures of a height of at least 10 µm after curing may be printed without sensibly spreading of the printed structures between printing and curing.

13. A sealable lid (2) comprising the foil according to one of claims 1 to 10.
